# FASCICULE DE BREVET EUROPEEN

(11) **EP 2 930 042 B1**
(45) Date de publication et mention de la délivrance du brevet: **19.10.2016**
(21) Numéro de dépôt: 15163097.7
(22) Date de dépôt: 10.04.2015
(51) Int. Cl.: B60K 15/03, B60K 15/035

(54) **RÉSERVOIR AVEC CANAL DE VENTILATION AVEC COUVERCLE**
TANK MIT BELÜFTUNGSKANAL MIT DECKEL
TANK WITH VENTILATION CHANNEL WITH COVER

(30) Priorité: 10.04.2014 FR 1453189
(43) Date de publication de la demande: 14.10.2015
(73) Titulaire: Inergy Automotive Systems Research (Société Anonyme), 1120 Bruxelles (BE)
(72) Inventeur: Dhaussy, Franck, 60280 Margny-les-compiègne (FR); Paolini, Gwereg, 60175 Le Plessis Brion (FR)
(74) Mandataire: Remy, Vincent Noel Paul

(56) Documents cités:
- DE-U1-202012 012 347
- US-A1- 2003 098 063
- US-B1- 6 213 170

## Description

La présente invention concerne un réservoir pour le stockage d'un liquide.

Un réservoir de stockage de carburant, ou d'un agent liquide (tel que de l'urée) destiné à être injecté dans des gaz d'échappement d'un moteur à combustion interne d'un véhicule, comprend un port, également dénommé orifice, de remplissage, par lequel le réservoir est alimenté en liquide, et un port de ventilation, qui permet à l'air et aux vapeurs de liquide présents dans le réservoir de s'échapper lors de son remplissage. Chacun de ces ports se situe à l'extrémité d'un conduit, généralement en forme de tube, qui traverse la paroi du réservoir et comprend une partie interne qui s'étend dans le réservoir jusqu'à une certaine hauteur, et une partie externe qui s'étend à l'extérieur du réservoir. La partie externe de chacun de ces conduits est reliée à une tubulure. Ainsi le port de remplissage se situe à l'extrémité interne d'un conduit de remplissage qui s'étend jusqu'à une certaine hauteur à l'intérieur du réservoir et dont l'extrémité externe est reliée à l'extérieur du réservoir à une tubulure de remplissage, et le port de ventilation se situe à l'extrémité interne d'un conduit de ventilation qui s'étend jusqu'à une hauteur Hv à l'intérieur du réservoir et dont l'extrémité externe est reliée à l'extérieur du réservoir à une tubulure de ventilation. Ces hauteurs sont mesurées par rapport à une référence arbitraire selon une direction verticale et dans la position normale d'utilisation du réservoir.

Le volume maximal de remplissage du réservoir est déterminé par la hauteur Hv du port de ventilation. En effet, lorsque le liquide, qui passe par le conduit de remplissage pour remplir le réservoir, atteint le port de de ventilation, le liquide ne peut plus remonter dans le réservoir et commence à remonter rapidement dans le conduit et la tubulure de remplissage sous l'effet de la pression des gaz emprisonnés dans le réservoir, jusqu'à atteindre le pistolet qui dispense le liquide. Plus la hauteur Hv du port de ventilation est petite, plus le pistolet est atteint tôt par le liquide lors du remplissage du réservoir, et par conséquent plus le niveau maximal de remplissage du réservoir est faible. On comprend donc que plus la hauteur Hv du port de ventilation à l'intérieur du réservoir est petite, moins le volume maximal de remplissage du réservoir est élevé.

Le conduit de ventilation constitue donc un dispositif d'arrêt de remplissage du réservoir.

Le volume maximal de remplissage souhaité du réservoir varie en fonction de divers critères. Ces critères incluent par exemple la nature de ce liquide, les équipements présents à l'intérieur du réservoir.

Les parties des conduits situées à l'intérieur du réservoir sont moulées directement avec le reste du réservoir. Cette solution présente l'inconvénient que la conformation du moule, et le démoulage de ces conduits, et donc du réservoir, sont plus complexes. La fabrication du réservoir est donc assez longue et coûteuse.

Un réservoir selon le préambule de la revendication 1 est connu du document US 6 213 170 B1.

La présente invention vise à remédier à ces inconvénients.

L'invention vise à proposer un réservoir dont le niveau maximum de remplissage peut être choisi aisément, et dont le coût de fabrication est le plus faible possible.

Ce but est atteint grâce au fait que le réservoir comprend une paroi en matière plastique et un dispositif d'arrêt de remplissage de ce réservoir par un liquide à un niveau maximum de remplissage, le dispositif s'étendant à l'intérieur du réservoir et comprenant au moins une ouverture dont la position à l'intérieur du réservoir fixe ce niveau maximum de remplissage, le dispositif d'arrêt de remplissage comprenant une première partie formée avec la paroi et une deuxième partie qui est fixée de manière étanche à la première partie.

Grâce à ces dispositions, le dispositif d'arrêt de remplissage est formé d'une façon simple par la fixation d'une deuxième partie sur une première partie qui est déjà présente sur la paroi et qui est aisément formée simultanément avec la paroi. On évite l'injection d'un conduit entier en forme de tube (ou autre forme) avec la paroi pour former le conduit de ventilation qui fixe le niveau maximal de remplissage du réservoir, et on évite la complexe opération de démoulage d'un tel conduit. On facilite donc la fabrication du réservoir.

Par exemple, la première partie comprend des reliefs moulés sur la face interne de la paroi, et la deuxième partie comprend un couvercle qui est fixé de manière étanche sur les reliefs.

Avantageusement, l'ouverture est formée par le couvercle et par les reliefs.

Ainsi, la forme et/ou les dimensions du couvercle permet de fixer la position de l'ouverture, et donc le niveau maximal de remplissage du réservoir.

Pour deux réservoirs identiques, on modifie aisément le niveau maximal de remplissage d'un réservoir à l'autre en fixant simplement sur les reliefs un couvercle de forme différente.

L'invention concerne également un procédé de fabrication d'un réservoir pour le stockage d'un liquide.

Selon l'invention, ce procédé comprend les étapes suivantes :
a) On fournit une première moitié d'un réservoir comprenant une paroi en matière plastique et comprenant une première partie d'un dispositif d'arrêt de remplissage du réservoir par un liquide à un niveau maximum de remplissage, la première partie étant formée avec la paroi,
b) On fixe de manière étanche sur la première partie une deuxième partie, cette deuxième partie formant avec la première partie le dispositif d'arrêt de remplissage, le dispositif d'arrêt de remplissage comprenant au moins une ouverture dont la position à l'intérieur du réservoir fixe ce niveau maximum de remplissage,
c) On fixe sur la première moitié du réservoir une deuxième moitié du réservoir de façon à former ce réservoir, le dispositif d'arrêt de remplissage s'étendant à l'intérieur du réservoir.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'un réservoir selon l'invention,
- la figure 2 est une vue en perspective d'un réservoir selon un autre mode de réalisation de l'invention,
- la figure 3 est une vue en perspective d'un réservoir selon encore un autre mode de réalisation de l'invention,
- la figure 4 est une vue en perspective d'un réservoir selon encore un autre mode de réalisation de l'invention.

Le réservoir 1 selon l'invention comprend une paroi 10 en matériau plastique, et la paroi 10 présente un premier port 91 qui débouche sur l'extérieur du réservoir.

Ce premier port 91 est réalisé directement dans la paroi 10, par exemple par perçage. Alternativement, ce premier port 91 se situe dans un élément (par exemple un embout ou un anneau) qui se loge dans un trou dans la paroi 10, l'espace annulaire dans cet élément constituant ce premier port 91.

Ainsi, dans tous les cas, la paroi 1 présente un premier port 91 par lequel le dispositif d'arrêt de remplissage communique avec l'extérieur du réservoir 1.

Des reliefs 20 s'étendent depuis le voisinage du premier port 91.

Ces reliefs 20 sont situés sur la face interne du réservoir 1. Dans la présente description, les termes « interne » et « intérieur » qualifient l'espace situé dans le réservoir 1, et les termes « externe » et « extérieur » qualifient l'espace situé à l'extérieur du réservoir 1.

Dans la présente description, lorsque l'on écrit qu'un élément (la première partie, les reliefs) est formé avec la paroi, on signifie que cet élément et la paroi sont fabriqués simultanément par un même procédé, de telle sorte que cet élément forme une seule pièce avec la paroi. Par « une seule pièce », on entend une pièce d'un seul tenant.

Ce procédé est par exemple l'injection d'une résine.

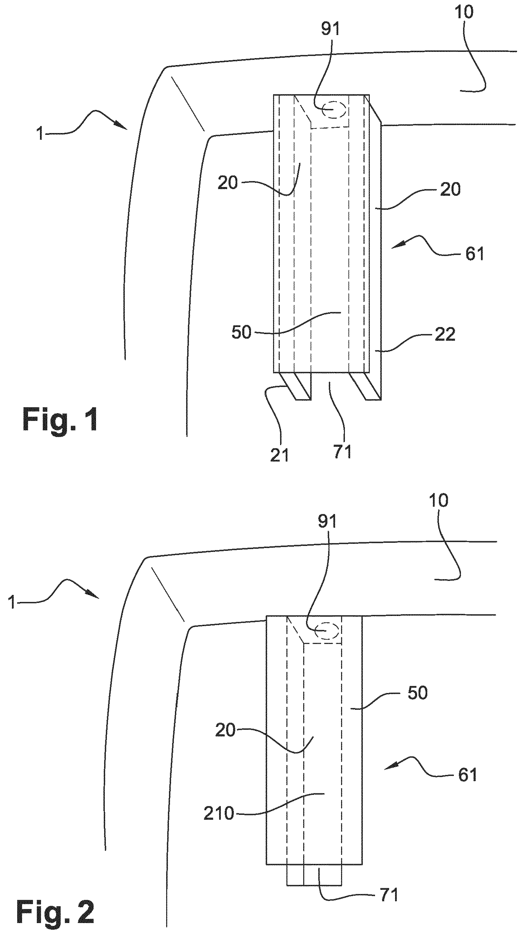

Comme représenté sur la figure 1, les reliefs 20 sont formés par des nervures (21, 22) s'étendant transversalement à l'intérieur du réservoir 1. Une première nervure 21 et une deuxième nervure 22 sont situées de part et d'autre du premier port 91 et s'étendent selon une direction longitudinale, le long de la paroi 10 du réservoir.

La direction longitudinale est sensiblement rectiligne, comme représenté sur la figure 1, et par exemple verticale dans la position d'utilisation normale du réservoir. Alternativement, elle peut être incurvée, c'est-à-dire que la direction longitudinale varie le long du premier canal 61, défini ci-dessous. La direction longitudinale s'étend depuis le premier port 91 jusqu'à l'ouverture 71 du premier canal 61.

Un couvercle 50 est fixé sur les arêtes de ces nervures (21, 22) de façon à former un premier canal 61. La fixation est effectuée par exemple par soudage.

Le couvercle 50 s'étend depuis le niveau du premier port 91 selon la direction longitudinale sur une partie au moins de ces nervures (21, 22).

Par exemple le couvercle 50 s'étend sur la totalité de la longueur de ces nervures (21, 22), comme représenté sur la figure 1.

Alternativement, les nervures (21, 22) sont conformées pour se rejoindre latéralement au voisinage du premier port 91 de façon à former un tube fermé latéralement s'étendant depuis le premier port 91 sur une certaine longueur. Au-delà de ce tube, le couvercle 50 est fixé sur les nervures (21, 22) de façon à fermer latéralement l'espace compris entre ces nervures (21, 22) et à former le premier canal 61.

Ainsi, selon l'invention, la paroi latérale du premier canal 61 est étanche.

Sur la partie du premier canal 61 portant le couvercle 50, les nervures (21, 22) forment une partie seulement de la paroi latérale du canal dans une section transversale donnée (c'est-à-dire une section perpendiculaire à la direction longitudinale), le reste de la paroi latérale du premier canal 61 étant formé par le couvercle 50.

A une certaine distance du premier port 91, le premier canal 61 présente une ouverture 71 qui débouche à l'intérieur du réservoir et au travers de laquelle un gaz est apte à circuler.

Dans tous les cas, l'extrémité du premier canal 61 au niveau du premier orifice 91 ne s'ouvre que sur ce premier orifice 91.

Ainsi, le premier canal 61 est un canal de ventilation du réservoir 1, de telle sorte que la position de l'ouverture 71 fixe le niveau maximum de remplissage du réservoir. En effet, le réservoir 1 présente un deuxième port 92 faisant communiquer l'intérieur et l'extérieur du réservoir 1 et par lequel un liquide est apte à passer pour remplir ce réservoir 1. Etant donné que le premier canal 61 est étanche entre le premier port 91 et l'ouverture 71, lorsque le liquide qui passe par le deuxième port 92 atteint l'ouverture 71, le liquide ne peut plus remonter dans le réservoir 1.

Avantageusement, l'ouverture 71 est formée au moins partiellement par le couvercle 50. Ainsi, la géométrie du couvercle 50 détermine la position de l'ouverture, et donc le niveau maximal de remplissage du réservoir.

Avantageusement, le couvercle 50 comprend un orifice traversant formant l'ouverture 71. L'ouverture 71 traverse donc uniquement le couvercle 50.

Ainsi, dans le cas de deux réservoirs qui ne doivent différer que par leur niveau maximal de remplissage, on modifie aisément ce niveau d'un réservoir à l'autre simplement en fixant sur les reliefs 20 un couvercle 50 dont seule la position de l'ouverture 71 a été modifiée. Il n'est pas nécessaire de modifier le reste des réservoirs.

Alternativement, l'ouverture 71 est formée par le couvercle 50 et par les reliefs 20. Ainsi, une partie du bord de l'ouverture 71 est formée par le couvercle 50, et l'autre partie du bord de l'ouverture 71 est formée par les reliefs 20. Le bord de l'ouverture 71 est la périphérie de cette ouverture.

Alternativement, l'ouverture 71 est formée par le couvercle 50, par les reliefs 20, et par la paroi 10. Cette situation est illustrée sur la figure 1.

La figure 2 illustre un autre mode de réalisation de l'invention, dans lequel les reliefs 20 sont formés par une rainure 210, et le couvercle 50 est fixé sur la rainure 210. La rainure 210 forme une dépression sur la face interne de la paroi 10 du réservoir

Le couvercle 50 est fixé sur les bords de la rainure 210 de façon à former un premier canal 61, comme représenté sur la figure 2. Alternativement, le couvercle 50 est fixé sur le fond et/ou les parois de la rainure 210.

Le premier port 91 est situé dans la rainure 210, qui s'étend selon une direction longitudinale, le long de la paroi 10 du réservoir.

La direction longitudinale est sensiblement rectiligne, comme représenté sur la figure 2. Alternativement, elle peut être incurvée.

Le couvercle 50 s'étend depuis le niveau du premier port 91 selon la direction longitudinale sur une partie au moins la rainure 210.

Par exemple le couvercle 50 s'étend sur la totalité de la longueur de la rainure 210, comme représenté sur la figure 2.

La paroi latérale du premier canal 61 est étanche.

Sur la partie du premier canal 61 portant le couvercle 50, la rainure 210 forme une partie seulement de la paroi latérale du canal dans une section transversale donnée, le reste de la paroi latérale du premier canal 61 étant formé par le couvercle 50.

A une certaine distance du premier port 91, le premier canal 61 présente une ouverture 71 qui débouche à l'intérieur du réservoir et au travers de laquelle un gaz est apte à circuler.

Dans tous les cas, l'extrémité du premier canal 61 au niveau du premier port 91 ne s'ouvre que sur ce premier port 91.

Ainsi, le premier canal 61 est un canal de ventilation du réservoir 1, de telle sorte que la position de l'ouverture 71 fixe le niveau maximum de remplissage du réservoir.

Le premier canal 61 forme donc le dispositif d'arrêt de remplissage du réservoir 1.

La description ci-dessus concernant l'ouverture 71 dans le cas où les reliefs 20 sont des nervures s'applique par analogie au cas où les reliefs 20 sont une rainure.

Dans les modes de réalisation représentés sur la figure 1 et la figure 2, le couvercle 50 est une plaque.

On entend par plaque un élément plan, c'est-à-dire un élément s'étendant uniquement (ou essentiellement) dans un plan.

La fabrication du couvercle 50 est ainsi facilitée.

Alternativement, le couvercle 50 est une coque, c'est-à-dire un élément incurvé dans l'espace dont deux des dimensions spatiales sont grandes devant la troisième.

Selon un mode de réalisation de l'invention, le réservoir présente un dispositif de remplissage (de ce réservoir), qui est par exemple un canal.

Ainsi, le réservoir présente un deuxième canal 62 de circulation de liquide entre l'intérieur et l'extérieur du réservoir 1, ce deuxième canal 62 étant formé par une partie des reliefs 20 s'étendant le long de ce deuxième canal 62, et par une partie du couvercle 50 qui est fixé de manière étanche sur les reliefs 20.

Le deuxième canal 62 présente une ouverture 72 qui débouche à l'intérieur du réservoir 1 et au travers de laquelle un liquide est apte à circuler. Ainsi, le liquide s'écoule du deuxième canal 62 dans le réservoir 1 au travers de cette ouverture 72.

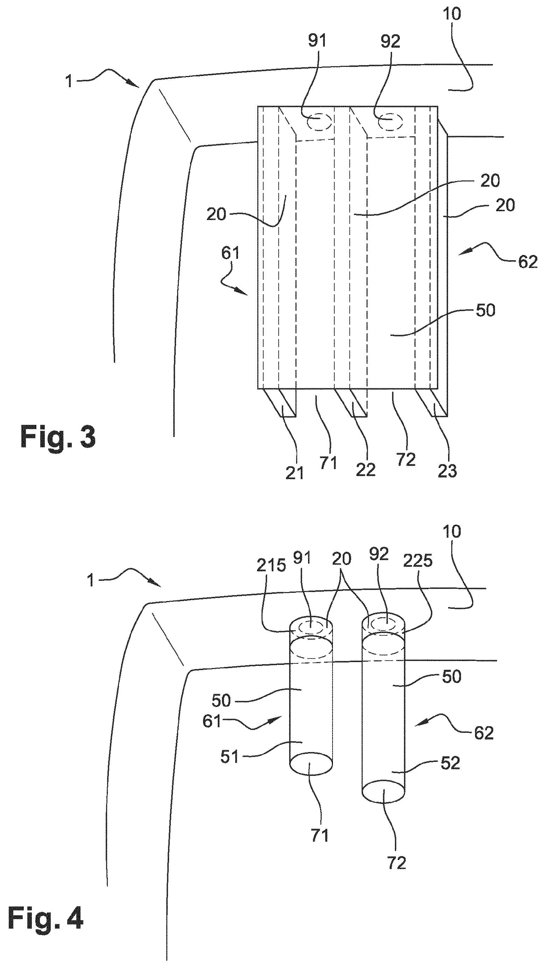

Un tel réservoir est représenté sur la figure 3.

Par exemple, ce deuxième canal 62 est le canal, également appelé conduit, de remplissage du réservoir 1 par lequel du liquide entre dans le réservoir 1. Le liquide entre dans le réservoir par le deuxième orifice 92, mentionné plus haut. Le deuxième orifice 92 se situe alors dans le deuxième canal 62, par exemple à une extrémité de ce deuxième canal 62.

Sur la figure 3, les reliefs sur la paroi 10 sont constitués par trois nervures (21, 22, 23) qui s'étendent sensiblement selon la même direction longitudinale, le couvercle 50 étant fixé sur ces trois nervures de façon à former avec la première nervure 21 et la deuxième nervure 22 le premier canal 61 qui est le canal de ventilation, et à former avec la deuxième nervure 22 et la troisième nervure 23 le deuxième canal 62 qui est le canal de remplissage.

Alternativement, les reliefs sur la paroi 10 sont constitués par deux rainures qui s'étendent sensiblement selon la même direction longitudinale, le couvercle 50 étant fixé sur ces deux rainures de façon à former avec la première rainure le premier canal 61 qui est le canal de ventilation, et à former avec la deuxième rainure le deuxième canal 62 qui est le canal de remplissage.

Selon l'invention, lorsque le réservoir 1 est en position normale d'utilisation, l'ouverture 71 du premier canal 61 de ventilation se situe en dessous (par rapport à la verticale) du premier port 91 de ventilation de telle sorte que lorsque le liquide remonte et atteint cette ouverture 71, il ne peut pénétrer dans la partie du premier canal 61 qui s'étend entre cette ouverture 71 et le premier orifice 91.

Il est avantageux que l'ouverture 72 du deuxième canal 62 de remplissage se situe en dessous de l'ouverture 71 du premier canal 61 de telle sorte que pendant le remplissage du réservoir 1 la ventilation s'effectue préférentiellement par ce premier canal 61.

Avantageusement, comme dans les modes de réalisation ci-dessus, sur la portion du premier canal 61, et/ou du deuxième canal 62, portant le couvercle 50, les reliefs 20 forment une part de la paroi latérale du canal dans chaque section transversale, le reste de la paroi latérale du canal étant formé par le couvercle 50. Une section transversale est une section perpendiculaire à la direction longitudinale du canal.

Ainsi, la fixation du couvercle 50 sur les reliefs 20 est plus facile à réaliser.

D'une manière générale, sur la portion de la première partie portant la deuxième partie, cette première partie forme une part de la paroi latérale du dispositif d'arrêt de remplissage dans chaque section transversale, le reste de la paroi latérale du dispositif d'arrêt de remplissage étant formé par la deuxième partie.

D'une manière générale, un dispositif de remplissage du réservoir est formé en partie par une partie des reliefs 20 et en partie par le couvercle 50 qui est fixé de manière étanche sur les reliefs 20, ce dispositif de remplissage présente une ouverture 72 qui débouche à l'intérieur du réservoir et au travers de laquelle un liquide est apte à circuler.

Dans la description ci-dessus, le terme « portion » est défini par rapport à la direction longitudinale du canal. Ainsi, « portion du canal » signifie une portion du canal entre une section transversale et une autre section transversale, perpendiculaires à la direction longitudinale.

Selon un autre mode de réalisation de l'invention, les reliefs 20 du premier canal 61 sont constitués par le bord de ce premier port 91. Ce bord peut avoir la forme d'une tuyère 215 qui s'étend à l'intérieur du réservoir. Dans ce cas, le couvercle 50 est un tube 51 qui prolonge ces reliefs 20. Le tube 51 est ainsi fixé, par exemple par soudage, sur le bord de cette tuyère 215 de façon à prolonger cette tuyère 215. La tuyère 215 et le tube 51 sont ainsi soudés bord à bord, le bord d'une extrémité longitudinale du tube 51 étant soudé sur le bord de la tuyère 215. L'autre extrémité longitudinale du tube 51 constitue alors l'ouverture 71 du premier canal 61, ce premier canal 61 étant constitué par la tuyère 215 et par le tube 51.

En modifiant la longueur du tube 51, on modifie la hauteur de remplissage du réservoir.

Ce mode de réalisation est représenté sur la figure 4.

En variante, chaque canal selon l'invention est conformé de façon similaire. Ainsi, comme représenté sur la figure 4, les reliefs 20 du deuxième canal 62 sont constitués par le bord de ce deuxième port 92. Ce bord peut avoir la forme d'une tuyère 225 qui s'étend à l'intérieur du réservoir. Dans ce cas, la partie du couvercle 50 pour ce deuxième canal 62 est un tube 52 qui prolonge ces reliefs 20. Le tube 52 est ainsi fixé, par exemple par soudage, sur le bord de cette tuyère 225 de façon à prolonger cette tuyère 225. La tuyère 225 et le tube 52 sont ainsi soudés bord à bord, le bord d'une extrémité longitudinale du tube 52 étant soudé sur le bord de la tuyère 225. L'autre extrémité longitudinale du tube 52 constitue alors l'ouverture 72 du deuxième canal 62, ce deuxième canal 62 étant constitué par la tuyère 225 et par le tube 52.

Dans la description ci-dessus, le couvercle 50 peut être d'une seule pièce, ou en plusieurs morceaux disjoints.

L'invention concerne également un procédé de fabrication d'un réservoir 1 pour le stockage d'un liquide, selon lequel on fournit une première moitié d'un réservoir 1 comprenant une paroi 10 en matière plastique et comprenant une première partie d'un dispositif d'arrêt de remplissage du réservoir 1 par un liquide à un niveau maximum de remplissage, la première partie étant formée avec la paroi 10 (étape (a)). Puis on fixe de manière étanche sur la première partie une deuxième partie, cette deuxième partie formant avec la première partie le dispositif d'arrêt de remplissage, le dispositif d'arrêt de remplissage comprenant au moins une ouverture 71 dont la position à l'intérieur du réservoir fixe ce niveau maximum de remplissage (étape (b)). Puis on fixe sur la première moitié du réservoir 1 une deuxième moitié du réservoir 1 de façon à former ce réservoir 1, le dispositif d'arrêt de remplissage s'étendant à l'intérieur du réservoir 1 (étape (c)).

Tous les modes de réalisation et variantes du réservoir 1 selon l'invention qui sont décrites ci-dessus s'appliquent au procédé selon l'invention.

## Revendications

1. Réservoir (1) pour le stockage d'un liquide, comprenant une paroi (10) en matière plastique et un dispositif d'arrêt de remplissage dudit réservoir (1) par un liquide à un niveau maximum de remplissage, le dispositif d'arrêt de remplissage s'étendant à l'intérieur du réservoir et comprenant au moins une ouverture (71) dont la position à l'intérieur dudit réservoir fixe ledit niveau maximum de remplissage, ledit dispositif d'arrêt de remplissage étant **caractérisé en ce qu'**il comprend une première partie (20) formée avec ladite paroi (10) et une deuxième partie (50) qui est fixée de manière étanche à ladite première partie.

2. Réservoir (1) selon la revendication 1 **caractérisé en ce que** ladite première partie comprend des reliefs (20) moulés sur la face interne de ladite paroi (10), et **en ce que** ladite deuxième partie comprend un couvercle (50) qui est fixé de manière étanche sur lesdits reliefs (20).

3. Réservoir (1) selon la revendication 2 **caractérisé en ce que** ladite ouverture (71) est formée par ledit couvercle (50) et par lesdits reliefs (20).

4. Réservoir (1) selon la revendication 2 **caractérisé en ce que** ledit couvercle (50) comprend un orifice traversant formant ladite ouverture (71).

5. Réservoir (1) selon l'une quelconque des revendications 2 à 4 **caractérisé en ce que** sur la portion de ladite première partie portant ladite deuxième partie, ladite première partie forme une part de la paroi latérale dudit dispositif d'arrêt de remplissage dans chaque section transversale perpendiculaire à la direction longitudinale selon laquelle s'étend ledit dispositif d'arrêt de remplissage, le reste de ladite paroi latérale étant formé par ladite deuxième partie.

6. Réservoir (1) selon l'une quelconque des revendications 2 à 5 **caractérisé en ce que** ladite paroi (10) présente un premier port (91) par lequel ledit dispositif d'arrêt de remplissage communique avec l'extérieur dudit réservoir (1).

7. Réservoir (1) selon l'une quelconque des revendications 2 à 6 **caractérisé en ce que** lesdits reliefs (20) sont formés par des nervures (21, 22) s'étendant transversalement vers l'intérieur dudit réservoir (1), ledit couvercle (50) étant fixé sur les arêtes desdites nervures (21, 22).

8. Réservoir (1) selon l'une quelconque des revendications 2 à 6 **caractérisé en ce que** lesdits reliefs (20) sont formés par une rainure (210), ledit couvercle (50) étant fixé sur ladite rainure (210).

9. Réservoir (1) selon l'une quelconque des revendications 2 à 8 **caractérisé en ce que** ledit couvercle (50) est une plaque.

10. Réservoir (1) selon l'une quelconque des revendications 2 à 9 **caractérisé en ce qu'**il présente un dispositif de remplissage dudit réservoir (1) par un liquide, ledit dispositif de remplissage étant formé en partie par une partie desdits reliefs (20) et en partie par ledit couvercle (50) qui est fixé de manière étanche sur lesdits reliefs (20), ce dispositif de remplissage présentant une ouverture (72) qui débouche à l'intérieur du réservoir et au travers de laquelle un liquide est apte à circuler.

11. Procédé de fabrication d'un réservoir (1) pour le stockage d'un liquide, ce procédé étant **caractérisé en ce qu'**il comprend les étapes suivantes :
a) On fournit une première moitié d'un réservoir (1) comprenant une paroi (10) en matière plastique et comprenant une première partie (20) d'un dispositif d'arrêt de remplissage dudit réservoir (1) par un liquide à un niveau maximum de remplissage, ladite première partie (20) étant formée avec ladite paroi (10),
b) On fixe de manière étanche sur ladite première partie (20) une deuxième partie (50), ladite deuxième partie formant avec ladite première partie ledit dispositif d'arrêt de remplissage, ledit dispositif d'arrêt de remplissage comprenant au moins une ouverture (71) dont la position à l'intérieur dudit réservoir fixe ledit niveau maximum de remplissage,
c) On fixe sur ladite première moitié du réservoir (1) une deuxième moitié dudit réservoir (1) de façon à former ce réservoir (1), ledit dispositif d'arrêt de remplissage s'étendant à l'intérieur dudit réservoir (1).

## Patentansprüche

1. Tank (1) zum Bevorraten einer Flüssigkeit, umfassend eine Wand (10) aus Kunststoff und eine Vorrichtung zum Stoppen der Befüllung des Tanks (1) mit einer Flüssigkeit bei einer maximalen Füllhöhe, wobei die Vorrichtung zum Stoppen der Befüllung sich im Inneren des Tanks erstreckt und mindestens eine Öffnung (71) umfasst, deren Position im Inneren des Tanks die maximale Füllhöhe festlegt, wobei die Vorrichtung zum Stoppen der Befüllung **dadurch gekennzeichnet ist, dass** sie einen ersten Teil (20), der von der Wand (10) gebildet wird, und einen zweiten Teil (50), der abdichtend an dem ersten Teil befestigt ist, umfasst.

2. Tank (1) nach Anspruch 1, **dadurch gekennzeichnet, dass** der erste Teil Erhöhungen (20) aufweist, die auf der Innenfläche der Wand (10) geformt sind, und dass der zweite Teil einen Deckel (50) umfasst, der abdichtend auf den Erhöhungen (20) befestigt ist.

3. Tank (1) nach Anspruch 2, **dadurch gekennzeichnet, dass** die Öffnung (71) von dem Deckel (50) und von den Erhöhungen (20) gebildet wird.

4. Tank (1) nach Anspruch 2, **dadurch gekennzeichnet, dass** der Deckel (50) eine durchgehende Öffnung umfasst, welche die Öffnung (71) bildet.

5. Tank (1) nach einem der Ansprüche 2 bis 4, **dadurch gekennzeichnet, dass** auf dem Abschnitt des ersten Teils, der den zweiten Teil trägt, der erste Teil einen Teil der Seitenwand der Vorrichtung zum Stoppen der Befüllung in jedem Querschnitt, der zu der Längsrichtung, in der sich die Vorrichtung zum Stoppen der Befüllung erstreckt, senkrecht ist, bildet, wobei die übrige Seitenwand durch den zweiten Teil gebildet wird.

6. Tank (1) nach einem der Ansprüche 2 bis 5, **dadurch gekennzeichnet, dass** die Wand (10) eine erste Öffnung (91) aufweist, durch welche die Vorrichtung zum Stoppen der Befüllung mit außerhalb des Tanks (1) kommuniziert.

7. Tank (1) nach einem der Ansprüche 2 bis 6, **dadurch gekennzeichnet, dass** die Erhöhungen (20) von Rippen (21, 22) gebildet werden, die sich quer zu dem Inneren des Tanks (1) hin erstrecken, wobei der Deckel (50) an den Kanten der Rippen (21, 22) befestigt ist.

8. Tank (1) nach einem der Ansprüche 2 bis 6, **dadurch gekennzeichnet, dass** die Erhöhungen (20) durch eine Nut (210) gebildet werden, wobei der Deckel (50) an der Nut (210) befestigt ist.

9. Tank (1) nach einem der Ansprüche 2 bis 8, **dadurch gekennzeichnet, dass** der Deckel (50) eine Platte ist.

10. Tank (1) nach einem der Ansprüche 2 bis 9, **dadurch gekennzeichnet, dass** er eine Vorrichtung zum Befüllen des Tanks (1) mit einer Flüssigkeit aufweist, wobei die Vorrichtung zum Befüllen zum Teil von einem Teil der Erhöhungen (20) und zum Teil von dem Deckel (50), der abdichtend auf den Erhöhungen (20) befestigt ist, gebildet wird, wobei die Vorrichtung zum Befüllen eine Öffnung (72) aufweist, die im Inneren des Tanks mündet und durch die hindurch eine Flüssigkeit zirkulieren kann.

11. Verfahren zur Herstellung eines Tanks (1) zum Bevorraten einer Flüssigkeit, wobei das Verfahren **dadurch gekennzeichnet ist, dass** es die folgenden Schritte umfasst:
a) Bereitstellen einer ersten Hälfte eines Tanks (1), umfassend eine Wand (10) aus Kunststoff und umfassend einen ersten Teil (20) einer Vorrichtung zum Stoppen der Befüllung des Tanks (1) mit einer Flüssigkeit bei einer maximalen Füllhöhe, wobei der erste Teil (20) von der Wand (10) gebildet wird,
b) abdichtendes Befestigen eines zweiten Teils (50) auf dem ersten Teil (20), wobei der zweite Teil mit dem ersten Teil die Vorrichtung zum Stoppen der Befüllung bildet, wobei die Vorrichtung zum Stoppen der Befüllung mindestens eine Öffnung (71) umfasst, deren Position im Inneren des Tanks die maximale Füllhöhe festlegt,
c) Befestigen einer zweiten Hälfte des Tanks (1) auf der ersten Hälfte des Tanks (1), so dass dieser Tank (1) gebildet wird, wobei die Vorrichtung zum Stoppen der Befüllung sich im Inneren des Tanks (1) erstreckt.

## Claims

1. Tank (1) for storing a liquid, comprising a wall (10) made of plastic and a device for stopping the filling of said tank (1) with a liquid at a maximum fill level, this fill-stop device extending inside the tank and comprising at least one opening (71) of which the position inside the said tank fixes the said maximum fill level, the said fill-stop device being **characterized in that** it comprises a first part (20) formed with the said wall (10) and a second part (50) which is fixed hermetically to the said first part.

2. Tank (1) according to Claim 1, **characterized in that** the said first part comprises reliefs (20) moulded on the internal face of the said wall (10), and **in that** the said second part comprises a cover (50) which is fixed hermetically to the said reliefs (20).

3. Tank (1) according to Claim 2, **characterized in that** the said opening (71) is formed by the said cover (50) and by the said reliefs (20).

4. Tank (1) according to Claim 2, **characterized in that** the said cover (50) comprises a through-orifice forming the said opening (71).

5. Tank (1) according to any one of Claims 2 to 4, **characterized in that** on the portion of the said first part that bears the said second part, the said first part forms part of the lateral wall of the said fill-stop device in each cross section perpendicular to the longitudinal direction in which the said fill-stop device extends, the rest of the said lateral wall being formed by the said second part.

6. Tank (1) according to any one of Claims 2 to 5, **characterized in that** the said wall (10) has a first port (91) via which the said fill-stop device communicates with the outside of the said tank (1).

7. Tank (1) according to any one of Claims 2 to 6, **characterized in that** the said reliefs (20) are formed by ribs (21, 22) extending transversely towards the inside of the said tank (1), the said cover (50) being fixed to the edges of the said ribs (21, 22).

8. Tank (1) according to any one of Claims 2 to 6, **characterized in that** the said reliefs (20) are formed by a groove (210), the said cover (50) being fixed over the said groove (210).

9. Tank (1) according to any one of Claims 2 to 8, **characterized in that** the said cover (50) is a plate.

10. Tank (1) according to any one of Claims 2 to 9, **characterized in that** it has a device for the filling of the said tank (1) with a liquid, this said filling device being formed in part by part of the said reliefs (20) and in part by the said cover (50) which is fixed hermetically to the said reliefs (20), this filling device having an opening (72) which opens to the inside of the tank and through which a liquid is able to flow.

11. Method of manufacturing a tank (1) for storing a liquid, this method being **characterized in that** it comprises the following steps:
a) supplying a first half of a tank (1) comprising a wall (10) made of plastic and comprising a first part (20) of a device for stopping the filling of the said tank (1) with a liquid at a maximum fill level, the said first part (20) being formed with the said wall (10),
b) fixing a second part (50) hermetically to the said first part (20), the said second part forming, with the said first part, the said fill-stop device, the said fill-stop device comprising at least one opening (71) of which the position within the said tank fixes the said maximum fill level,
c) fixing a second half of the said tank (1) to the said first half of the tank (1) so as to form this tank (1), the said fill-stop device extending inside the said tank (1).
